# EUROPEAN PATENT APPLICATION

(11) **EP 0 994 010 A2**
(43) Date of publication of application: **19.04.2000**
(21) Application number: 99120287.0
(22) Date of filing: 12.10.1999
(51) Int. Cl.: B62D 43/00, B62H 3/12, F16B 45/00

(54) **Lockable suspension hanger**

(30) Priority: 16.10.1998 NO 984850
(71) Applicant: Sundhagen, Lena, 1335 Snaroya (NO)
(72) Inventor: Sundhagen, Gunnar, 2008 Fjerdingby (NO)
(74) Representative: Dr. Weitzel & Partner

(57) **Abstract**

Lockable suspension hanger (1) to firmly hold and firmly lock one or more items to a wall or any other mainly vertical surface. The suspension hanger comprises a bracket (2) that is designated to be attached to the wall, at least one outwards oriented rod (3) and a lock (4), which is designated to be attached to the rod (3) and locked onto this. The rod (3) is pivot mounted in the bracket (2), so that the rod (3) in unused position can be swung against the wall.

## Description

The present invention relates to a lockable suspension hanger in order to keep in position and to lock one or more items to a wall or any other mainly vertical surfaces, comprising a bracket which is designated to be attached to a wall or similar, at least one outward oriented rod and a lock, which is designated to be attached to the rod and locked onto this.

Several suspension hangers of the above mentioned type are known:

US-5.638.710 shows firm locking of a spare tyre in a special lifting appliance which is used on certain car models. The tyre is here placed horizontally and is hanging in a wire 20, and the locking appliance is designated to have the function to prevent the tyre to be removed from the lifting appliance.

US-4.328.687 shows an appliance for locking a firearm fixedly to a wall. The appliance involves two parts, one part comprising a cylindrical lock which is to be attached to the wall, and one part comprising a rod and a disc, which are to be lead through the arm's trigger guard. To prevent that the locking appliance can be unscrewed from the wall, it also comprises a disc 34, which covers the screws that attach the appliance to the wall. The appliance is not pivotable in relation to the wall. The rod part may be removed, but implies however, the disadvantage that it might be lost.

US-4.751.833 shows a locking appliance for firm locking of a spare tyre to a fastening bracket on a vehicle. The locking appliance comprises several parts, among others nuts 34, which has to be screwed on and unscrewed when the spare tyre is to be fixed or removed. The appliance is firmly locked by the help of an ordinary padlock. This device can not pivot in relation to the side of the vehicle.

US-1.790.656 shows an additional appliance to fasten a spare tyre to a vehicle. The locking appliance replaces one of the nuts that fixes the spare tyre to the fastening bracket, and is operated by a cylinder lock. Nor this appliance can be pivoted.

SE-436376 shows an additional locking appliance for firm locking of several spare tyres either to the floor or to the wall. The appliance comprises a padlock that can be run through one or more holes in a rod. Neither this appliance can be pivoted to the wall.

US 4679717 shows a carrier for spare wheels, for mounting to an automobile. It comprises a bracket and an arm linked to the bracket. Distal on the arm a spare wheel can be attached by bolts and nuts. The arm can be swung outwardly from the car.

Us 5806736 describes a similar device, in which the arm can be locked against the car by a pad lock.

US 4794771 describes a device similar to US 5638710. The main difference being that the arm is connected to a tube on the underside of the car and can be pivoted relative to this tube around an axis transverse to the tube.

US 3940178 show a device to attach a spare wheel to the inside wall of a pick up. It comprises a pivotable arm, which can be swung upwardly. If released it will fall down into a protruding position again. The wheel can be locked by a chain extending from the arm to a place at the opposite side of a wheel well.

US 4153188 show a device to attach a spare wheel to an automobile. It comprises an arm, which at one end can be detachable inserted into a bracket on the vehicle. At its opposite end the arm has a series of holes or notches which a lever arm can be brought to engagement with. The lever is used to press the spare wheel against the surface on which the bracket is mounted.

An essential disadvantage with several of the known hanging appliances for wall installations is that a rod will protrude from the wall also when the hanging appliance is not in use. For instance with U-4.328.687 the rod, however, can be removed but then at the risk that this will be lost.

The arm of US 4679717 and of US 5806736 can be swung against the side of the car, but nevertheless the bolts to attach the spare wheel onto will protrude from the side of the car. In total the mounting device will protrude just as much as the other devices described above.

Should a theoretical attempt be made to mount the arm of US 4794771 onto a wall, it will protrude in a slanted angle from the wall, and thus be unable to carry, e.g. a wheel.

Us 4153188 has a major disadvantage in that force has to be exerted to press the lever down. The wheel may in many instances be easily removed by releasing the air from the tyre and then slide the arm out of the bracket.

It is clearly a need for a suspension device for mounting an item, e.g., a wheel, to, e.g., a wall, that is simple to use, secure and that can easily be swung out of the way when it is not in use. The present invention is therefore aiming to remove this disadvantage of the known hanging appliances. This is achieved by the rod being pivotable supported in the bracket, so that the rod when not used can be swung against the wall.

The invention will be explained in more detail below with reference to the one accompanying figure. This figure shows in perspective a lockable hanging appliance according to the present invention.

The hanging appliance 1 comprises a bracket 2 and one outward oriented rod 3 connected to the bracket, plus a lock 4, which is aligned to be connected with the rod 3. The bracket 2 is a plate formed body, wherein a hole 5 is shaped, through which can be inserted screws, rivets or similar for fastening the bracket 2 for example to a wall.

On the bracket 2 is modelled a number of protuberances 6, which every second is curved to the opposite side. These protuberances define a channel 7 that expands all along bracket 2. The procedure for modelling such protuberances is described in detail in PCT/NO97/00080. It shall therefore not be explained in detail here.

The rod 3 consists of two main parts. A first part 8, which is received rotatable in channel 7, and a second part 9, which is connected in approximately at right angle with the first part 8 and when in use mainly protrudes at right angle from the bracket's 2 level.

On the rod's 3 second part 9 are formed grooves, notches or similar, which stretch along a section of the second part 9.

The lock 4 comprises a locking case 11, through which a continuous hole 12 is formed. In the locking case there is also mounted a conventional cylinder lock 13, which in a conventional way is equipped with a pawl mechanism (not shown), which can come into engagement with the grooves or notches 10 within the hole 12.

The present hanging appliance is first and foremost intended for firm locking of vehicle tyres or rim wheels to a wall. In such a case a wheel bolt hole or hub hole on the rim wheel can be threaded into the rod's 3 second part 9 so far that the wheel or rim will touch the wall. Thereafter the lock 4 is conducted into the rod 3's second part 9 until the locking case is touching the rim. The cylindrical lock 13 is then locked so that the pawl mechanism comes in gear with the grooves or notches 10.

In a preferred design the grooves or notches 10 and the pawl mechanism are adapted to each other so that, by the help of corresponding sloping surfaces, the lock 4 can be conducted along the rod's 3 second part 9 also after the locking cylinder 13 is locked. The pawl mechanism and the grooves or notches 10 are, however, adapted to each other so that the lock 4 cannot be pulled along the rod's 3 second part 9 after the locking cylinder 13 is locked. With other words the pawl mechanism and the grooves or notches 10 will work as a pawl and ratchet mechanism.

When the suspension hanger 1 according to the invention is not in use the rod 3 can be swung towards the wall by the rod's 3 first part 8 rotates in the channel 7. The suspension hanger can therefore be brought to a position where is will not be in the way nor expose persons to danger. The rod's 3 first part 8 is locked axially in the channel 7, for instance by a bulb (not shown).

If the bracket 2 is fastened to the wall with the help of conventional screws, the appliance which is to be locked preferably ought to have a form so that it covers the screws and make these inaccessible from the outside. In cases where the appliance will not cover the holes 5, the bracket 2 ought to be fastened by the help of fastening arrangement which does not easily open, for instance rivets or so called one way screws, or a cover/disc is mounted which covers the fastening arrangements.

It is also conceivable to hang more than one item on the same suspension hanger, for instance two or more vehicle tyres or rims. Two or more suspension hangers can according to the present invention also be used to lock up larger items, such as for example a bicycle.

Even if the suspension hanger specifically is described as a wall suspension hanger, this can of course also be attached to any other approximately vertical surface, as for instance the rear hatch of a vehicle.

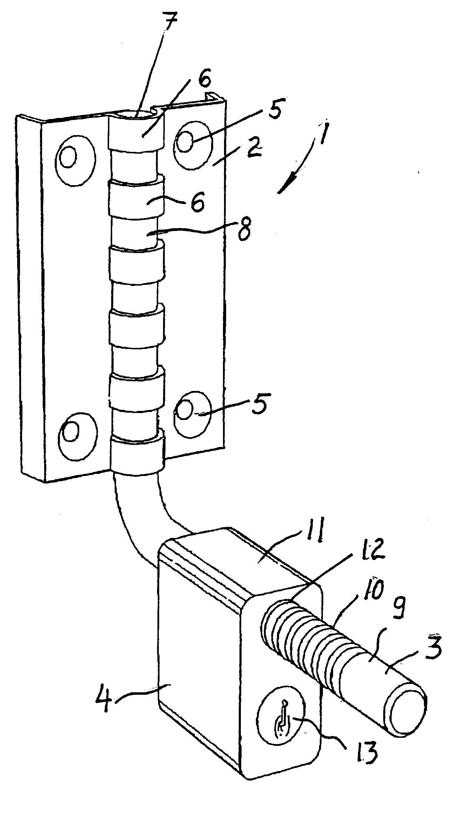

## Claims

1. Lockable suspension hanger (1) to firmly hold and firmly lock one or more items to a wall or another mainly vertical surface, comprising a bracket (2) which is designated to be attached to the wall or similar, at least one outward oriented rod (3) and a lock (4), which is designated to be attached to the rod (3) and firmly locked to this to prevent the item from being removed from the rod(3), **characterized in** that the rod (3) being pivotable supported in the bracket (2), so that the rod (3) in unused position can be swung against the wall.

2. Lockable suspension hanger according to claim 1, **characterized in** that the rod (3) comprises a first part (8), which is pivot mounted in the bracket, and a second part (9), which is outward oriented from the bracket (2), which first and second part (8, 9) are firmly connected to each other in a mainly right angle.

3. Lockable suspension hanger according to claim 2, **characterized in** that the first part (8) is rotatable received in the bracket (2) in a channel (7) which is formed by oppositely modelled protuberances (7) in the bracket (2).

4. Lockable suspension hanger according to one of the claims 1-3**, characterized in** that the rod's (3) outward oriented part (9) comprising at least one groove (10), notch or similar in which a locking pawl or similar on the lock (4) can come into position.

5. Lockable suspension hanger according to claim 4, **characterized in** that the rod (3) comprises several subsequently placed grooves (10), notches or similar, in which the lock (4) selectively can be firmly locked in a chosen position from the bracket (2).

6. Lockable suspension hanger according to claim 5, **characterized in** that the lock's (4) locking pawl and the rod's (3) grooves (10) or similar are shaped in such a proportion to each other that a ramp is formed on the locking pawl and/or on each groove (10), so that the lock (4) can be pushed over the grooves (10) in locked position in direction towards the bracket (2), but that in the opposite direction is formed an engagement between the locking pawl and the grooves (10), so that the lock (4) is restrained from relocating in this direction when the lock (4) is locked.

7. Lockable suspension hanger according to one of the claims 4-6, **characterized in** that the lock (4) comprises a continuous hole (12), through which the rod's (3) outward oriented part (9) can come into engagement with the lock (4).

8. Lockable suspension hanger according to one of the previous claims 1-7, **characterized in** that the bracket (2) is designated to be attached by means of screws to the wall or similar, said screws being designated to be covered by the firmly locked item when the suspension hanger (1) is in use.

9. Application of the lockable suspension hanger (1), comprising a bracket (2) which is designated to be fastened to a wall or any other mainly vertical surface, with at least one from the bracket (2) outward oriented rod (3) and a lock (4), which is designated to be attached to the rod (3) and firmly locked to this, to prevent the item from being removed from the rod (3), where the rod (3) is pivot mounted in the bracket (2), so that the rod (3) in unused position can be swung against the wall, for firmly locking at least one vehicle wheel or mounting wheel, by the rod (3) being thread through an opening in the mounting wheel, like a wheel bolt hole or a hub hole, the wheel or mounting wheel being brought to close contact with the wall or similar and the lock (4) being placed in tight contact against the mounting wheel, so that the bracket (2) becomes inaccessible from the outside.
